# EUROPEAN PATENT APPLICATION

(11) **EP 4 531 428 A1**
(43) Date of publication of application: **02.04.2025**
(21) Application number: 23908706.7
(22) Date of filing: 15.08.2023
(51) Int. Cl.: H04R 1/10

(54) **ACOUSTIC OUTPUT DEVICE**

(71) Applicant: Shenzhen Shokz Co., Ltd., Shenzhen, Guangdong 518108 (CN)
(72) Inventor: HUANG, Yujia, Shenzhen Guangdong 518108 (CN); DENG, Wenjun, Shenzhen Guangdong 518108 (CN); ZHOU, Wenbing, Shenzhen Guangdong 518108 (CN); YUAN, Yongshuai, Shenzhen Guangdong 518108 (CN); LIAO, Fengyun, Shenzhen Guangdong 518108 (CN); QI, Xin, Shenzhen Guangdong 518108 (CN)
(74) Representative: Wang, Bo
(86) International application number: PCT/CN2023/113119
(87) International publication number: WO 2025/035388

(57) **Abstract**

The embodiments of the present disclosure provides an acoustic output device. The acoustic output device includes a sound generation component, a support member, and a sensor. The sound generation component is configured to accommodate a sound generation unit that produces sound. The support member is configured to dispose the sound generation component near an ear without blocking an earhole. The sensor includes at least one ultrasonic transducer disposed inside the sound generation component. The sensor is configured to transmit a first ultrasonic signal to an outside of the sound generation component through the at least one ultrasonic transducer. The transducer is further configured to detect the second ultrasonic signal through the at least one ultrasonic transducer and determine a wearing state of the acoustic output device based on the detection. The second ultrasonic signal includes the first ultrasonic signal or a reflection signal of the first ultrasonic signal. When a change in the wearing state of the acoustic output device causes a change in the second ultrasonic signal detected by the transducer, the output state of the acoustic output device changes.

## Description

### TECHNICAL FIELD

The present disclosure relates to a field of acoustics, and in particular to acoustic output devices.

### BACKGROUND

In the current market, a wear detection sensor is widely used in products such as a true wireless stereo (TWS) earphone, etc. In a typical application, when the earphone is recognized to be worn by a user, the system of the earphone is automatically waked up, and when it is recognized that the user takes off the earphone, the earphone automatically enters a standby mode, thereby reducing power consumption and prolonging usage time, and at the same time, reducing user's operation steps and greatly improving user experience.

Currently, a mainstream wear detection sensor includes a photoelectric sensor, a capacitive sensor, etc. When performing a wearing detection on an open earphone, as the open earphone does not have a fixed in-ear structure, situations of wearing instability and an inconsistent wearing position may occur, and traditional wearing detection solutions may not achieve an ideal detection effect. For example, a wearing detection solution based on the capacitive sensor is susceptible to interference (e.g., by sweat). As another example, a wear detection solution based on the photoelectric sensor is affected by a direct current (DC) light in different wearing positions, or by a low-frequency light signal during motion.

It is therefore necessary to propose a device and a method capable of accurately recognizing a wearing state of the open earphone.

### SUMMARY

One of the embodiments of the present disclosure provides an acoustic output device. The acoustic output device includes a sound generation component, a support member, and a sensor. The sound generation component is configured to accommodate a sound generation unit that produces a sound. The support member is configured to dispose the sound generation component near an ear without blocking an earhole. The sensor includes at least one ultrasonic transducer disposed inside the sound generation component. The sensor is configured to transmit a first ultrasonic signal to an outside of the sound generation component through the at least one ultrasonic transducer. The sensor is further configured to detect a second ultrasonic signal through the at least one ultrasonic transducer and determine a wearing state of the acoustic output device based on the detection. The second ultrasonic signal includes the first ultrasonic signal or a reflection signal of the first ultrasonic signal. When a change in the wearing state of the acoustic output device causes a change in the second ultrasonic signal detected by the sensor, an output state of the acoustic output device changes.

In some embodiments, the sound generation component includes an inner sidewall facing the ear, and the at least one ultrasonic transducer is arranged on the inner sidewall.

In some embodiments, the at least one ultrasonic transducer includes a vibration sheet configured to generate the first ultrasonic signal, and a frequency of the first ultrasonic signal is not less than 40 kHz. The inner sidewall is provided with an aperture, and the first ultrasonic signal is spread to an outside of the sound generation component through the aperture.

In some embodiments, the frequency of the first ultrasonic signal is not less than 150 kHz.

In some embodiments, an angle of a directivity of the first ultrasonic signal is in a range of 5°-90°.

In some embodiments, an area of the aperture on the inner sidewall is in a range of 0.5 mm²-1 cm².

In some embodiments, the sound produced by the sound generation unit is exported to an outside of the sound generation component through the aperture on the inner sidewall.

In some embodiments, the inner sidewall is provided with a sound outlet hole, and the sound produced by the sound generation unit is exported to an outside of the sound generation component through the sound outlet hole.

In some embodiments, a count of the at least one ultrasonic transducer is one, the ultrasonic transducer transmits the first ultrasonic signal to the outside of the sound generation component during a transmission time period and detects the second ultrasonic signal during a receiving time period, and the second ultrasonic signal is the reflection signal of the first ultrasonic signal.

In some embodiments, a count of the at least one ultrasonic transducer is multiple, and a portion of the multiple ultrasonic transducers transmits the first ultrasonic signal to the outside of the sound generation component, the other portions of the multiple ultrasonic transducers detect the second ultrasonic signal. The second ultrasonic signal is the reflection signal of the first ultrasonic signal, and the multiple ultrasonic transducers are located inside the sound generation component.

One of the embodiments of the present disclosure further provides an acoustic output device. The acoustic output device may include a sound generation component, an earhook, and a sensor. The sound generation component is configured to accommodate a sound generation unit that produces a sound. One end of the earhook is connected to the sound generation component and disposes the sound generation component near an ear without blocking an earhole, the other end of the earhook is connected to a target warehouse body, in a wearing state of the acoustic output device, the sound generation component and the target warehouse body are located on both sides of the ear, respectively. The sensor includes a first ultrasonic transducer and a second ultrasonic transducer respectively disposed inside the sound generation component and the target warehouse body. The sensor is configured to transmit, through one of the first ultrasonic transducer and the second ultrasonic transducer, an ultrasonic signal to the other of the first ultrasonic transducer and the second ultrasonic transducer, and detects, through the other of the first ultrasonic transducer and the second ultrasonic transducer, the ultrasonic signal. The sensor is further configured to determine the wearing state of the acoustic output device based on the detection. When a change of the wearing state of the acoustic output device causes a change in the ultrasonic signal detected by the sensor, an output state of the acoustic output device changes.

In some embodiments, a frequency of the ultrasonic signal is not less than 20 kHz.

In some embodiments, an angle of a directivity of the ultrasonic signal is in a range of 5°-90°.

In some embodiments, the sound generation component includes an inner sidewall facing the ear, and the first ultrasonic transducer is arranged on the inner sidewall.

In some embodiments, the sensor is configured to transmit the ultrasonic signal through the first ultrasonic transducer to the second ultrasonic transducer and detects the ultrasonic signal through the second ultrasonic transducer.

In some embodiments, the first ultrasonic transducer includes a vibration sheet configured to generate an ultrasonic signal. The inner sidewall is provided with an aperture, the ultrasonic signal is spread to an outside of the sound generation component through the aperture.

In some embodiments, an area of the aperture on the inner sidewall is in a range of 0.5 mm²-1 cm².

In some embodiments, the sound produced by the sound generation unit is exported to an outside of the sound generation component through the aperture on the inner sidewall.

In some embodiments, the inner sidewall is provided with a sound outlet hole, and the sound produced by the sound generation unit is exported to an outside of the sound generation component through the sound outlet hole.

In some embodiments, the sensor is configured to transmit the ultrasonic signal to the first ultrasonic transducer through the second ultrasonic transducer and detects the ultrasonic signal through the first ultrasonic transducer.

### BRIEF DESCRIPTION OF THE DRAWINGS

The present disclosure is further illustrated in terms of exemplary embodiments. These exemplary embodiments are described in detail with reference to the drawings. These embodiments are not limiting, and in these embodiments, the same numbering denotes the same structure, wherein:
FIG. 1 is a block diagram illustrating an acoustic output device according to some embodiments of the present disclosure;
FIG. 2 is a schematic diagram illustrating an acoustic output device according to some embodiments of the present disclosure;
FIG. 3 is a schematic diagram illustrating a low-frequency ultrasonic transducer according to some embodiments of the present disclosure;
FIG. 4 is a schematic diagram illustrating an in-ear acoustic output device provided with a low-frequency ultrasonic transducer according to some embodiments of the present disclosure;
FIG. 5 is a schematic diagram illustrating a non-in-ear acoustic output device provided with a low-frequency ultrasonic transducer according to some embodiments of the present disclosure;
FIG. 6 is a schematic diagram illustrating a high-frequency ultrasonic transducer according to some embodiments of the present disclosure;
FIG. 7 is a schematic diagram illustrating a non-in-ear acoustic output device provided with a high-frequency ultrasonic transducer according to some embodiments of the present disclosure;
FIG. 8 is a schematic diagram illustrating a non-in-ear acoustic output device provided with an ultrasonic transducer with a great directivity angle according to some embodiments of the present disclosure;
FIG. 9 is a schematic diagram illustrating a non-in-ear acoustic output device provided with an ultrasonic transducer with a small angle of directivity according to some embodiments of the present disclosure;
FIG. 10 is a schematic diagram illustrating a non-in-ear acoustic output device provided with a single ultrasonic transducer according to some embodiments of the present disclosure;
FIG. 11 is a schematic diagram illustrating a non-in-ear acoustic output device provided with multiple ultrasonic transducers according to some embodiments of the present disclosure;
FIG. 12 is a schematic diagram illustrating an acoustic output device according to some embodiments of the present disclosure;
FIG. 13A is a schematic diagram illustrating a wearing state detection of a non-in-ear acoustic output device according to some embodiments of the present disclosure; and
FIG. 13B is a schematic diagram illustrating a wearing state detection of a non-in-ear acoustic output device according to some embodiments of the present disclosure.

### DETAILED DESCRIPTION

In order to more clearly illustrate the technical solutions of the embodiments of the present disclosure, the accompanying drawings required to be used in the description of the embodiments are briefly described below. Obviously, the accompanying drawings in the following description are only some examples or embodiments of the present disclosure, and it is possible for those skilled in the art to apply the present disclosure to other similar scenarios based on the accompanying drawings without creative labor. Unless obviously obtained from the context or the context illustrates otherwise, the same numeral in the drawings refers to the same structure or operation.

It should be understood that as used herein, the terms "system", "device", "unit" and/or "module" as used herein is a way to distinguish between different components, elements, parts, sections or assemblies at different levels. However, the words may be replaced by other expressions if other words accomplish the same purpose.

As used in the present disclosure and the appended claims, the singular forms "a," "an," and "the" include plural referents unless the content clearly dictates otherwise. Generally, the terms "including" and "comprising" suggest only the inclusion of clearly identified steps and elements that are explicitly identified, but these steps and elements do not constitute an exclusive list, and the method or device may also include other steps or elements.

Flowcharts are used in the present disclosure to illustrate steps performed by a system in accordance with embodiments of the present disclosure. It should be appreciated that the preceding or following steps are not necessarily performed in an exact sequence. Instead, the steps may be processed in reverse order or simultaneously. Also, it is possible to add other operations to these processes or remove a step or steps from them.

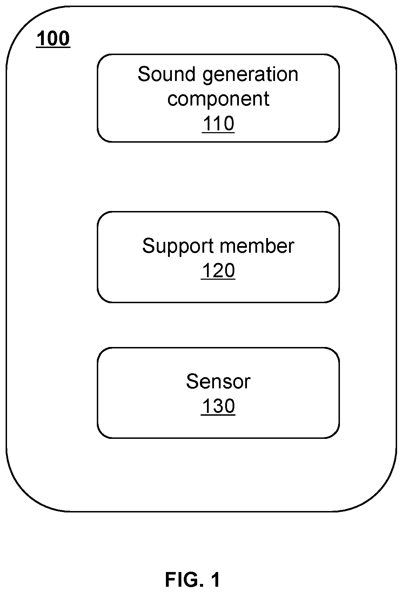

FIG. 1 is a block diagram illustrating an acoustic output device according to some embodiments of the present disclosure. In some embodiments, as shown in FIG. 1, an acoustic output device 100 may include a sound generation component 110, a support member 120, and a sensor 130.

The sound generation component 110 is disposed near the ear of a user without blocking an earhole. The sound generation component 110 may generate a sound and input the sound into the ear canal of the user. In some embodiments, the sound generation component 110 may include a sound generation unit.

The sound generation unit is an assembly of the acoustic output device 100 that converts an electrical signal into a sound. In some embodiments, a type of the sound generation unit may include a moving coil type, an electromagnetic type, a capacitive type, a piezoelectric type, etc. Specifically, a moving-coil type sound generation unit may include a permanent magnet that is able to be used as a magnetic source and a coil. When passing through the coil, an electric current may interact with a magnetic field generated by the magnetic source, thereby causing a vibration of a diaphragm to produce the sound. An electromagnetic type sound generation unit may include an electromagnet that is able to be used as the magnetic source, and when being is energized, the coil may generate the magnetic field that makes the electromagnet to attract or repel the diaphragm, thereby producing the sound. A capacitive type sound generation unit may use two parallel electrode plates to drive the diaphragm. The diaphragm may be an insulating material coated with a conductive material on both sides, so that when a voltage is applied between the electrodes, an electric field force is generated to drive the diaphragm to vibrate and produce sound. A piezoelectric type sound generation unit may use piezoelectric ceramics or piezoelectric polymers as the diaphragm. When a voltage is applied, a shape of the piezoelectric material may change, which generates the vibration and produces the sound.

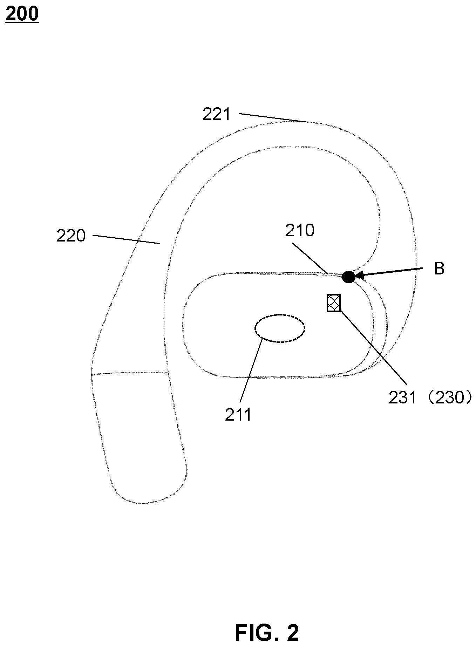

The support member 120 is a component for fixing the sound generation component 110 near the ear of the user without blocking the earhole. In some embodiments, the support member 120 is a curved structure that fits a junction of the ear and head of the user (referring to, for example, a support member 220 shown in FIG. 2), and the support member 120 may be hung at the junction of an auricle and the head to keep the sound generation component 110 fixed near the ear without blocking the earhole. In some embodiments, the support member 120 is a structure that adapts to the auricle of the ear of the user, and the support member 120 may be clamped at the auricle of the user. For example, the support member 120 straddled the auricle of the ear and is clamped to either side of the auricle of the ear of the user to keep the sound generation component 110 to be fixed to the ear without blocking the earhole. In some embodiments, the support member 120 may have a curved structure that matches a head region of a human body, so as to facilitate an adaptation of the support member 120 to a head region, such as a back of the head, a forehead, or a top of the head of the user. For example, the support member 120 may be a rear-hanging structure. The rear-hanging structure may be a curved structure that fits a contour of a back side of the head of the user. In some embodiments, the support member 120 may be made of a high flexible, light, and abrasion-resistant material such as a polyamide, a rubber, a silicone, a soft plastic, a titanium, or a stainless steel, etc.

The sensor 130 may be used to recognize a wearing state of the acoustic output device 100. In some embodiments, the sensor 130 may include a capacitive sensor, which is able to convert a contact pressure into a capacitance value. Given this, the capacitive sensor may detect a change of an electrical capacitance of the acoustic output device 100 in both the wearing state and a non-wearing state, and recognize the wearing state and the non-wearing state of the acoustic output device 100 based on a magnitude of the capacitance. In some embodiments, the sensor 130 may include a pressure sensor, and the pressure sensor may convert the contact pressure into an electrical signal. The pressure sensor may detect a change in the electrical signal of the acoustic output device 100 between the wearing and non-wearing states, and identify the wearing and non-wearing states of the acoustic output device 100 based on the magnitude of the electrical signal. In some embodiments, the sensor 130 may include a photoelectric sensor, and the photoelectric sensor may convert a light signal into the electrical signal. The photoelectronic sensor may detect the change of the electrical signal of the acoustic output device 100 in both the wearing state and the non-wearing state, and identify the wearing state and the non-wearing state of the acoustic output device 100 based on the magnitude of the electrical signal.

In some embodiments, the sensor 130 may include at least one ultrasonic transducer. The ultrasonic transducer may be used to transmit an ultrasonic signal and/or detect the ultrasonic signal. The sensor 130 may transmit a first ultrasonic signal and detect a second ultrasonic signal via an ultrasonic transducer, and determine the wearing state of the acoustic output device 100 based on the detected second ultrasonic signal. In some embodiments, the second ultrasonic signal may include the first ultrasonic signal or a reflection signal of the first ultrasonic signal. For example, when the detected second ultrasonic signal is the reflection signal of the first ultrasonic signal, when the acoustic output device 100 is in the non-wearing state, the transmitted first ultrasonic signal spreads directly to an outside, and the second ultrasonic signal is not detected. As another example, when the detected second ultrasonic signal is the reflection signal of the first ultrasonic signal, when the acoustic output device 100 is in the wearing state, the transmitted first ultrasonic signal is efficiently reflected by a human ear, so that a strength of the reflection signal is enhanced, and thus a strength of the detected second ultrasonic signal is greater than a strength the transmitted first ultrasonic signal. Further example, when the detected second ultrasonic signal is the first ultrasonic signal, when the acoustic output device 100 is in the non-wearing state, the strength of the transmitted first ultrasonic signal and the strength of the detected second ultrasonic signal is the same or tend to be the same; when the acoustic output device 100 is in the wearing state, the second ultrasonic signal is not detected. Thus, the wearing state of the acoustic output device 100 may be determined based on the comparison between the second ultrasonic signal and the first ultrasonic signal.

In some embodiments, the ultrasonic transducer may include a function module that is set as desired. For example, the ultrasonic transducer may include one functional module that is used to both transmit the ultrasonic signal and receive the ultrasonic signal. As another example, the ultrasonic transducer may include a transmission function module and a receiving function module. The transmission function module is configured for transmitting the ultrasonic signal and the receiving function module is configured for receiving the ultrasonic signal. Merely as an example, the ultrasonic transducer may include a piezoelectric material. An exemplary piezoelectric material may include a piezoelectric ceramic, a piezoelectric crystal (e.g., barium titanate, lead zirconate titanate, etc.), a piezoelectric polymer (e.g., vinylidene fluoride), etc., or any combination thereof. Due to the piezoelectric effect/inverse piezoelectric effect of the piezoelectric material, the ultrasonic transducer may generate the ultrasonic signal by converting electrical energy into a mechanical vibration, and when receiving the ultrasonic signal, the ultrasonic transducer may correspondingly undergo the mechanical vibration to generate the electrical energy.

In some embodiments, the sensor 130 may further include a control circuit. The control circuit may identify that the acoustic output device 100 is in a wearing state or in a non-wearing state based on the detection of the second ultrasonic signal. In some embodiments, when the sensor 130 detects the change in the second ultrasonic signal, it may be determined that the wearing state of the acoustic output device 100 changes. For example, when the detected second ultrasonic signal is the reflection signal of the first ultrasonic signal, and the second ultrasonic signal becomes stronger, it may be determined that the acoustic output device 100 changes from the non-wearing state to the wearing state. As another example, when the detected second ultrasonic signal is the first ultrasonic signal and the second ultrasonic signal becomes weaker, it may be determined that the acoustic output device 100 changes from the wearing state to the non-wearing state. In some embodiments, the control circuit presets a threshold related to a strength difference between the transmitted first ultrasonic signal and the detected second ultrasonic signal. The threshold may be a minimum difference between the strength of the first ultrasonic signal and the strength of the second ultrasonic signal. The control circuit may determine the strength difference between the first ultrasonic signal and the second ultrasonic signal. When the detected second ultrasonic signal is the reflection signal of the first ultrasonic signal, and the strength difference is greater than the threshold, the control circuit may determine that the acoustic output device 100 is in the wearing state; and when the strength difference is less than or equal to the threshold, the control circuit may determine that the acoustic output device 100 is in the non-wearing state. When the detected second ultrasonic signal is the first ultrasonic signal, and the strength difference is greater than the threshold, the control circuit may determine that the acoustic output device 100 is in the wearing state; when the strength difference is less than or equal to the threshold, the control circuit may determine that the acoustic output device 100 is in the non-wearing state. In some embodiments, the threshold may be set as desired. For example, to reduce the probability of misdetection and to improve the accuracy of the detection, the threshold may be set to a great value. The misdetection as described in the present disclosure refers to that the sensor detects the non-wearing state of the acoustic output device as the wearing state due to a touch of a non-ear structure (e.g., a finger).

In some embodiments, when the change in the wearing state of the acoustic output device 100 causes the change in the second ultrasonic signal of the sensor 130, the output state of the acoustic output device 100 may change accordingly. Specifically, when the acoustic output device 100 is in the wearing state, the acoustic output device 100 may be switched to a working state in which the sound generation unit starts to produce sound. When the acoustic output device 100 is in the non-wearing state, the acoustic output device 100 may switch to a non-working state in which the sound generation unit stops producing sound. In some embodiments, the control circuit may control the switching of the output state of the acoustic output device 100. When detecting that the strength of the second ultrasonic signal becomes greater or that the difference (the strength difference between the first ultrasonic signal and the second ultrasonic signal) is greater than or equal to the threshold, the control circuit controls the acoustic output device 100 to switch to the working state; when detecting that the second ultrasonic signal becomes smaller or that the difference is smaller than the threshold, the control circuit control the acoustic output device 100 to switch to the non-working state.

In some embodiments, the ultrasonic transducer may be disposed at the sound generation component 110, and the ultrasonic transducer may be used to transmit and receive the ultrasonic signal. For example, the ultrasonic transducer may include a transmission function module and a receiving function module. The transmission function module may be configured to transmit the first ultrasonic signal, and the receiving function module may be configured to receive the second ultrasonic signal. In some embodiments, the sensor 130 may include multiple ultrasonic transducers. The multiple ultrasonic transducers may be disposed at the sound generation component 110, and a portion of the multiple ultrasonic transducers may be used to transmit the first ultrasonic signal, the other portions of the multiple ultrasonic transducers may be used to receive the second ultrasonic signal.

In some embodiments, the sensor 130 may include two ultrasonic transducers, one of the two ultrasonic transducers may be located in the sound generation component 110, and the other of the two ultrasonic transducers may be disposed within the target warehouse body, or the positions of the two may be exchanged. In some embodiments, the sensor 130 may include multiple ultrasonic transducers, a portion of the multiple ultrasonic transducers used to transmit the ultrasonic signal may be disposed within a housing of the sound generation component 110, and a portion of the multiple ultrasonic transducers used to receive the ultrasonic signal may be disposed within the target warehouse body, or the positions of the two may be exchanged. The target warehouse body refers to a warehouse that is located on both sides of the auricle together with the sound generation component 110 when the acoustic output device 100 is in the wearing state. In some embodiments, the target warehouse body may be a battery warehouse body of the acoustic output device 100. In some embodiments, the target warehouse body may be a partial cavity inside the support member 120.

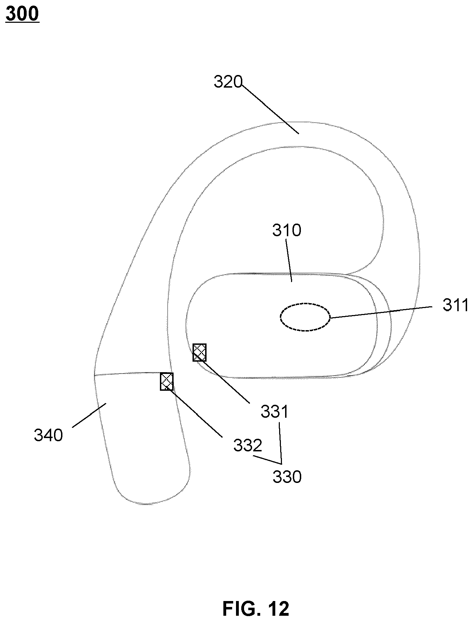

In some embodiments, the acoustic output device 100 may further include a housing that accommodates the sound generation component 110 and the sensor 130. The housing may be connected to the support member 120. The housing refers to a shell structure for accommodating and protecting components inside it. In some embodiments, a shape of the housing may be a cuboid, a cuboid-like, a cylinder, an ellipsoid, or other regular and irregular three-dimensional structures. The housing may be designed as a one-piece or split-pieces. For example, the housing may include two portions disposed at two ends of the support member 120 and may be respectively connected to the support member 120. One portion of the housing may be configured to accommodate the sound generation component 110, and the other portion of the housing may be configured to form the target warehouse body. In some embodiments, a material of the housing may be metal, plastic, ceramic, etc., so that the housing has good strength, wear resistance, and anti-interference properties to effectively protect the internal components (e.g., the sound generation component 110 and the sensor 130). Further descriptions of the acoustic output device may be found elsewhere in the present disclosure, such as in FIG. 2, FIG. 12 and the related descriptions thereof.

An open (or non-in-ear) acoustic output device 100 may not have a fixed in-ear structure, and a wearing position of the acoustic output device 100 is less stable and consistent. The wearing state of the acoustic output device 100 is detected by adopting the ultrasonic transducer. The ultrasonic transducer may not be interfered with by substances such as sweat, rain, etc., which can reduce the probability of misdetection the wearing state of the acoustic output device 100, and is more suitable for detecting the wearing of the open earphone.

FIG. 2 is a schematic diagram illustrating an acoustic output device according to some embodiments of the present disclosure. As shown in FIG. 2, the acoustic output device 200 may include a sound generation component 210, a support member 220, and a sensor 230. In some embodiments, the sound generation component 110, the support member 220, and the sensor 230 are example embodiments of the sound generation component 110, the support member 120, and the sensor 130 as shown in FIG. 1, respectively.

In some embodiments, the sound generation component 210 (or a housing that accommodates the sound generation component) may be rectangular-like (or runway-shaped). A cavity may be provided inside the sound generation component 210 for accommodating a sound generation unit 211. The sound generation unit 211 may produce a sound. In some embodiments, a sound output hole (not shown in the figure) may be provided on a side (e.g., a side that is proximate to the ear of a user and approximately parallel to the ear of the user) of the sound generation component 210, and the sound produced by the sound generation unit 211 may be output through the sound output hole and received by an earhole of the user.

In some embodiments, the support member 220 may be an earhook which is formed into an arc-shaped structure that fits a junction of the ear and the head of the user. In some embodiments, the support member 220 may have a hooked portion 221. When the acoustic output device 200 is in a wearing state, the hooked portion 221 of the support member 220 may hang between the auricle and the head of the user. The hooked portion 221 may extend toward a side that departs from the head and connects to an end of the sound generation component 210 to fix the sound generation component 210 at a position near the earhole without blocking the earhole.

In some embodiments, the sensor 230 may include at least one ultrasonic transducer 231, and the ultrasonic transducer 231 is disposed inside the sound generation component 210. The ultrasonic transducer 231 may transmit a first ultrasonic signal to an outside of the sound generation component 210 and detect a second ultrasonic signal. The second ultrasonic signal is a reflection signal of the first ultrasonic signal. In some embodiments, when the acoustic output device 200 is in a wearing state, the first ultrasonic signal may be reflected by an ear structure of the user (e.g., a concha cavity), and the ultrasonic transducer 231 may receive the reflection signal (i.e., the second ultrasonic signal) of the first ultrasonic signal. The second ultrasonic signal may be stronger than the first ultrasonic signal. In some embodiments, when the acoustic output device 200 is in a non-wearing state, the first ultrasonic signal may not be reflected and may spread directly to an outside world, and the ultrasonic transducer 231 may not receive the second ultrasonic signal. In some embodiments, when the acoustic output device 200 is in the non-wearing state, the first ultrasonic signal may be reflected by an object other than the ear structure of the user, and a strength of the second ultrasonic signal received by the ultrasonic transducer 231 may be consistent with a strength of the first ultrasonic signal, or the strengths of the first ultrasonic signal and the second ultrasonic signal may tend to be consistent.

In some embodiments, the sensor 230 may further include a control circuit (not shown in the figure) that detects the second ultrasonic signal and determines the wearing state of the acoustic output device 200 based on the detection. For example, the control circuit may determine that the acoustic output device 200 is in the wearing state when it detects that the strength of the second ultrasonic signal is greater than the strength of the first ultrasonic signal. As another example, the control circuit may determine that the acoustic output device 200 is in the non-wearing state when it detects that the strength of the second ultrasonic signal is close to or equal to the strength of the first ultrasonic signal. For another example, the control circuit may determine that the acoustic output device 200 is in the non-wearing state when it does not detect the second ultrasonic signal. In some embodiments, the control circuit may be communicatively connected to the ultrasonic transducer 231. The ultrasonic transducer 231 may transmit the first ultrasonic signal and the second ultrasonic signal to the control circuit in real time. In some embodiments, the control circuit may preset a first threshold related to a strength difference between the first ultrasonic signal and the second ultrasonic signal. When the control circuit detects that the strength difference between the second ultrasonic signal and the first ultrasonic signal is greater than or equal to the first threshold, it may be determined that the acoustic output device 200 is in the wearing state; when the control circuit detects that the strength difference between the second ultrasonic signal and the first ultrasonic signal is less than the first threshold, it may be determined that the acoustic output device 200 is in the non-wearing state.

In some embodiments, upon detecting a change in the wearing state of the acoustic output device 200, the control circuit may control the acoustic output device 200 to perform an output state conversion. When determining that the acoustic output device 200 has switched from the non-wearing state to the wearing state, the control circuit controls the acoustic output device 200 to switch to a working state; when determining that the acoustic output device 200 has switched from the wearing state to the non-wearing state, the control circuit may control the acoustic output device 200 to switch to a non-working state.

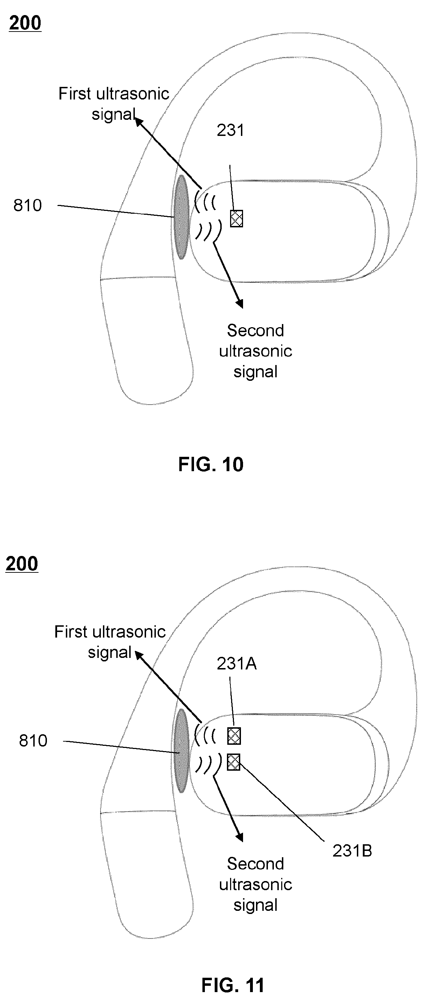

It may be appreciated that the acoustic output device 200 shown in FIG. 2 is for exemplary description only and does not constitute a limitation thereof. For example, the support member 220 may be a rear-hanging structure. For example, the sensor 230 may include a plurality of ultrasonic transducers 231. As another example, the ultrasonic transducer 231 may include a plurality of functional modules. Further descriptions of the acoustic output device 200 may be found in FIG. 10-FIG. 11 and the related descriptions thereof.

In some embodiments, the ultrasonic transducer 231 may include a vibration sheet. The vibration sheet may include a piezoelectric material. Due to an inverse piezoelectric effect of the piezoelectric material, the vibration sheet may convert an electrical signal into a mechanical vibration, and the mechanical vibration may cause an air oscillation that produces the ultrasonic signal. When the ultrasonic transducer 231 receives the ultrasonic signal, the ultrasonic signal may cause the air to oscillate, making the vibration sheet to vibrate mechanically. Due to the inverse piezoelectric effect of the piezoelectric material, the vibration sheet may convert the mechanical vibration into the electrical signal. The ultrasonic transducer 231 may transmit and receive the ultrasonic signal by applying the electrical signal to the vibration sheet and recognizing the electrical signal generated by the vibration sheet.

In some embodiments, the vibration sheet may produce the first ultrasonic signal. As the acoustic output device 200 is worn in an open manner, an angle and position of the sound generation component 210 with respect to the ear may vary each time the user wears the acoustic output device 200, resulting in an unstable and variable wearing position of the sound generation component 210. In order to more accurately detect the wearing state of the sound generation component 210 (or the acoustic output device 200), there is a need to improve a spatial directivity of the ultrasonic transducer 231. When the directivity is strong enough, the first ultrasonic signal transmitted by the ultrasonic transducer 231 may only be reflected and effectively detected when the sound generation component 210 is worn at a specific position and angle. In some embodiments, the directivity of the ultrasonic transducer 231 may be improved by increasing a frequency of the first ultrasonic signal transmitted by the ultrasonic transducer 231 to achieve a more accurate detection of the wearing state of the sound generation component 210 and reduce a probability of misdetection.

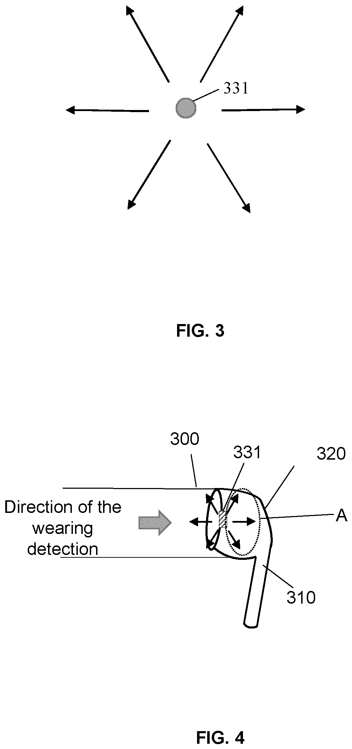

FIG. 3 is a schematic diagram illustrating a low-frequency ultrasonic transducer according to some embodiments of the present disclosure.

The low-frequency ultrasonic transducer refers to a ultrasonic transducer that transmits a ultrasonic signal with a frequency lower than a particular value. For example, the low-frequency ultrasonic transducer may transmit the ultrasonic signal at the frequency below 40 kHz, 30 kHz, 25 kHz, etc. As shown in FIG. 3, the low-frequency ultrasonic transducer 331 may be viewed as a point sound source. The low-frequency ultrasonic transducer 331 may transmit low-frequency long waves in a diffuse manner at a great angle (e.g., 360°). At this point, the ultrasonic signal transmitted by the low-frequency ultrasonic transducer 331 has no directivity. The directivity in the present disclosure may be an angle of directivity of the ultrasonic signal transmitted by the ultrasonic transducer, which is consistent with an angle of diffusion of the ultrasonic signal from the ultrasonic transducer. When the angle of directivity of the ultrasonic signal is smaller, the directivity may be better. The ultrasonic signal shown in FIG. 3 has an angle of diffusion of 360°. At this time, the low-frequency ultrasonic transducer 331 lacks directivity.

FIG. 4 is a schematic diagram illustrating an in-ear acoustic output device provided with a low-frequency ultrasonic transducer according to some embodiments of the present disclosure.

The in-ear acoustic output device refers to an acoustic output device that blocks an earhole of the user when the user wears the acoustic output device. As shown in FIG. 4, when a user wears an in-ear acoustic output device 300, a front end of the acoustic output device 300 may penetrate into an ear canal of a user and block an earhole 310, and a portion (e.g., a portion A) of the acoustic output device 300 proximate to the ear canal may be blocked by an ear structure 320 of the user. When a wearing detection is performed on the in-ear acoustic output device 300, the low-frequency ultrasonic transducer 331 may transmit low-frequency long waves that diffuse in a 360° manner, and an ultrasonic signal in a direction of the wearing detection along the ear canal of the user may be strengthened due to the reflection of the ear canal structure, and the ultrasonic signal departs from the ear canal of the user also is enhanced due to a blocking reflection of an ear structure, that is, the ultrasonic signal transmitted by the low-frequency ultrasonic transducer 331 may be closed by the ear structure of the user, and basically no misdetection may occur. As a result, an application of the low-frequency ultrasonic transducer 331 on the in-ear acoustic output device 300 also is capable of accurately detecting the wearing state of the in-ear acoustic output device 300.

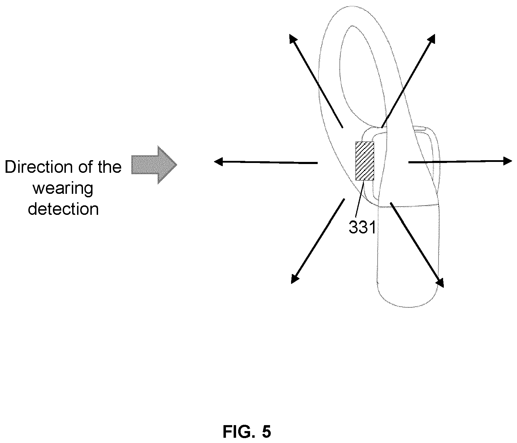

FIG. 5 is a schematic diagram illustrating a non-in-ear acoustic output device provided with a low-frequency ultrasonic transducer according to some embodiments of the present disclosure.

The non-in-ear acoustic output device (e.g., the acoustic output device 200) refers to an acoustic output device that is worn close to the ear of a user without blocking an earhole. As shown in FIG. 5, when the user wears the non-in-ear acoustic output device, the non-in-ear acoustic output device as a whole is in an open state. When the wearing detection is performed on the non-in-ear acoustic output device, the low-frequency long waves transmitted by the low-frequency ultrasonic transducer 331 may spread out in a 360° manner, and an ultrasonic signal in a direction of the wearing detection toward the ear of the user may be strengthened due to a reflection of anear structure. However, the ultrasonic signal in other directions can not blocked by the ear structure and may leak from various angles and positions. As a result, objects in the other directions may interfere with the ultrasonic signal, leading to a misdetection. The non-in-ear acoustic output device may have a high degree of variability in angle and position relative to the ear when worn, with a higher probability of objects appearing in other directions, which increases the probability of misdetection. Therefore, for the non-in-ear acoustic output device, the wearing state is not accurately detected by the low-frequency ultrasonic generation unit 331.

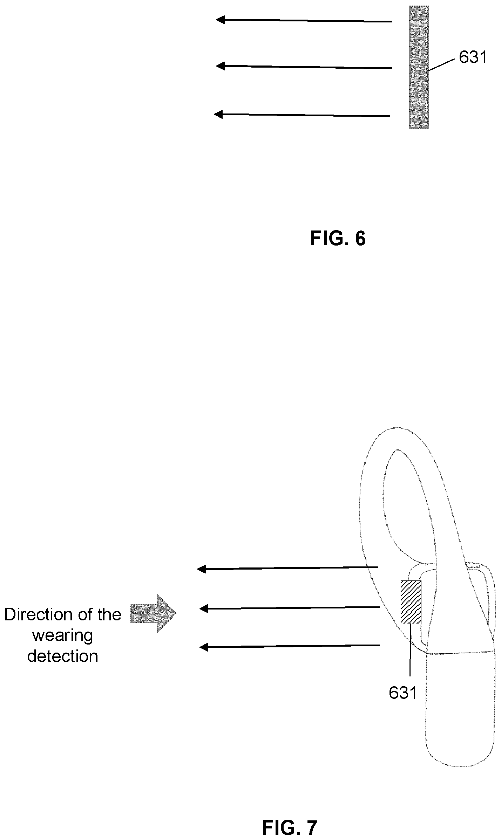

FIG. 6 is a schematic diagram illustrating a high-frequency ultrasonic transducer according to some embodiments of the present disclosure.

The high-frequency ultrasonic transducer refers to an ultrasonic transducer that transmits an ultrasonic signal with a frequency higher than a particular value. For example, the high-frequency ultrasonic transducer may transmit the ultrasonic signal at a frequency higher than 40 kHz, 50 kHz, etc. As shown in FIG. 6, a high-frequency ultrasonic transducer 631 may be viewed as a surface sound source, and high-frequency waves transmitted by the high-frequency ultrasonic transducer 631 may be directionally diffused. For example, the high-frequency waves may be directionally diffused toward one side of the high-frequency ultrasonic transducer 631. At this point, the ultrasonic signal transmitted by the high-frequency ultrasonic transducer 631 may have a directivity.

FIG. 7 is a schematic diagram illustrating a non-in-ear acoustic output device provided with a high-frequency ultrasonic transducer according to some embodiments of the present disclosure.

As shown in FIG. 7, when the non-in-ear acoustic output device undergoes a wearing detection, high-frequency ultrasonic waves transmitted by the high-frequency ultrasonic transducer 631 may spread along a specific direction, and may be capable of recognizing whether there is a blocking structure in the specific direction. When the non-in-ear acoustic output device is effectively worn, the ultrasonic signal transmitted by the high-frequency ultrasonic transducer 631 may be primarily blocked and reflected by an ear structure of a user in a transmission direction of the ultrasonic signal, and may not be affected by objects in other directions. Therefore, basically no misdetection may occur. As the ultrasonic signal transmitted by the high-frequency ultrasonic transducer 631 has a directivity, a reflection signal may only be received if the sound generation component of the non-in-ear acoustic output device is worn at a specific position and angle. Based on this, a plurality of irregular wearing states of the non-in-ear acoustic output device may be ruled out by adopting the high-frequency ultrasonic transducer 631. For example, when an actual wearing position of the non-in-ear acoustic output device has a deviation angle from a correct wearing position, the transducer may not detect the second ultrasonic signal or a difference between the detected second signal and the transmitted first ultrasonic signal may not satisfy a condition (e.g. below a threshold). At this time, the irregular wearing of the non-in-ear acoustic output device may not be detected as being in a wearing state.

In some embodiments, the higher a frequency of the first ultrasonic signal of the ultrasonic transducer, the stronger a directivity of the first ultrasonic signal, and thus the lower a probability of a misdetection caused. In some embodiments, the frequency of the first ultrasonic signal may not be less than 40 kHz. In some embodiments, to further improve the directivity of the first ultrasonic signal, the frequency of the first ultrasonic signal may not be less than 100 kHz. In some embodiments, to enable the first ultrasonic signal to point in a particular direction as well as to improve an accuracy of identification of the wearing state, the frequency of the first ultrasonic signal may not be less than 150 kHz. Preferably, the frequency of the first ultrasonic signal may not be less than 180 kHz. Preferably, the frequency of the first ultrasonic signal may not be less than 200 kHz.

By limiting the frequency of the first ultrasonic signal, various irregular wearing states of the non-in-ear acoustic output device may be excluded. By increasing the frequency of the first ultrasonic signal, the directionality of the first ultrasonic signal may be enhanced, thereby reducing the probability of misdetection due to other factors.

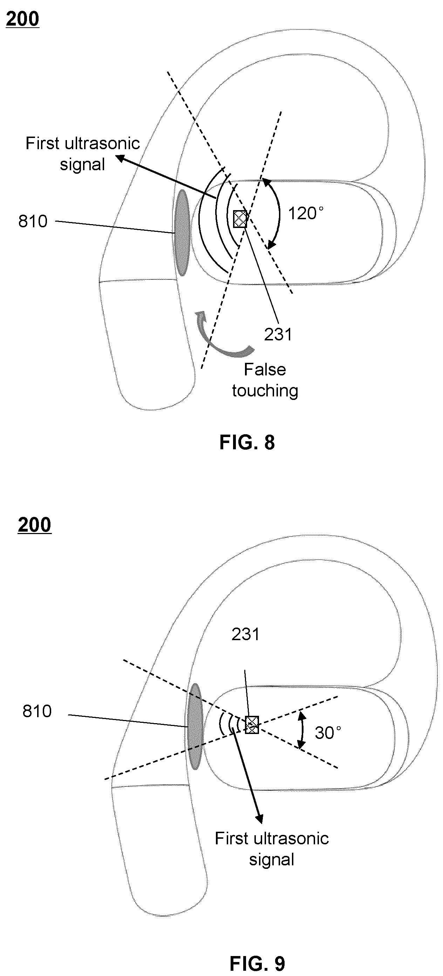

In some embodiments, the directivity (or an angle of directivity) of the first ultrasonic signal transmitted by at least one ultrasonic transducer 231 may be set within a preset angle range. FIG. 8 is a schematic diagram illustrating a non-in-ear acoustic output device provided with an ultrasonic transducer with a great angle of directivity according to some embodiments of the present disclosure. As shown in FIG. 8, when the angle of directivity of a first ultrasonic signal transmitted by the at least one ultrasonic transducer 231 is great, e.g., when the angle of directivity is 120°, a transmission path of the first ultrasonic signal may not be sufficiently covered by an ear structure of a user (referring to an ear region 810 in FIG. 8), the leaked first ultrasonic signal may be prone to be reflected by other objects, and a false touching may occur, resulting in a misdetection. For example, when touching the acoustic output device 200, a finger may tend to be placed on the transmission path of the first ultrasonic signal, causing a control circuit to mistakenly determine that the acoustic output device 200 is in a wearing state and mistakenly switch a working state of the acoustic output device 200.

FIG. 9 is a schematic diagram illustrating a non-in-ear acoustic output device provided with an ultrasonic transducer with a small angle of directivity according to some embodiments of the present disclosure. As shown in FIG. 9, when the angle of directivity of a first ultrasonic signal transmitted by the at least one ultrasonic transducer 231 is small, e.g., when the angle of directivity is 30°, the transmission path of the first ultrasonic signal may be sufficiently covered by the ear structure of the user (the ear region 810 in FIG. 9), and false touching is not likely to occur. Thus, in some embodiments, the preset angle may be in a range of 5°-90°. In some embodiments, to further improve the directivity of the first ultrasonic signal, the preset angle range may be 10°-70°. Preferably, the preset angle range may be 10°-60°. Preferably, the preset angle range may be 10°-50°.

Continuing to refer to FIG. 2, the sound generation component 210 may include an inner sidewall that is oriented toward the ear of the user when worn. In some embodiments, to enable the sound generation component 210 to cover more of the ear of the user while being worn, to ensure a sound receiving effect at an earhole of the user, and to minimize a probability of a misdetection, an area of the inner sidewall of the sound generation component 210 may be as great as possible. However, in order to ensure a lightness of the acoustic output device 200 and to meet a requirement of the comfort of the user when wearing the acoustic output device, the area of the inner sidewall may be as small as possible. Therefore, when setting the area of the inner sidewall, factors like a sound receiving effect, wearing comfort, etc. may need to be considered in a comprehensive manner. In some embodiments, the area of the inner sidewall may be in a range of 1 mm²-100 mm². Preferably, the area of the inner sidewall may be in a range of 10 mm²-80 mm². More preferably, the area of the inner sidewall may be in a range of 20 mm²-60 mm².

In some embodiments, due to a position limit of the sound generation unit 211, the at least one ultrasonic transducer 231 may be arranged on the inner sidewall. In some embodiments, within an effective projected area of the inner sidewall, a position of the ultrasonic transducer 231 may not be limited. The effective projected area refers to an area, directly opposite the ear, of the inner sidewall. A fact that the ultrasonic transducer 231 is located within the effective projected area may ensure that a transmission path of the first ultrasonic signal from the ultrasonic transducer 231 falls on the ear. In some embodiments, the effective projected area of the inner sidewall may be smaller than or equal to the area of the inner sidewall.

In some embodiments, the ultrasonic transducer 231 may be provided at a position close to a connection between the sound generation component 210 and the support member 220 (referring to point B shown in FIG. 2), so that the mass of the ultrasonic transducer 231 may be shared more by the support member 220, resulting in a better stability of the sound generation component 210 when worn, and a lower probability for the sound generation component 210 to fall off when worn. The connection may refer to a region where the sound generation component 210 is connected to the support member 220.

In some embodiments of the present disclosure, a sufficient mounting space may be left for the sound generation unit 211 inside the sound generation component 210 through disposing the ultrasonic transducer 231 on the inner sidewall of the sound generation component 210. When wearing the sound generation component 210, the inner sidewall may be oriented toward the ear of the user, the ultrasonic signal transmitted by the ultrasonic transducer 231 (e.g., the first ultrasonic signal) may fall on the ear, allowing for a more accurate and sensitive wearing detection.

In some embodiments, the inner sidewall may be provided with an aperture, through which the first ultrasonic signal spreads toward an outside of the sound generation component 210. In some embodiments, the aperture may be in the transmission path of the first ultrasonic signal transmitted by the ultrasonic transducer 231, such that the first ultrasonic signal spreads through the aperture toward the outside of the sound generation component 210. In some embodiments, a shape of the aperture may include, but not limited to, a regular shape such as a square, a round, a polygonal, etc., or an irregular shape. In some embodiments, a number of aperture on the inner sidewall may be 1, 2, or multiple. In some embodiments, the multiple apertures disposed in the inner sidewall may be distributed in an array, or may be irregularly distributed. In some embodiments, a strength of the ultrasonic signal transmitted and received by the ultrasonic transducer 231 may be adjusted by adjusting an area, the number, or a density of the aperture. In some embodiments, the aperture may be covered with a waterproof/dustproof mesh to the aperture in the inner sidewall from affecting a reliability of the sound output device.

In some embodiments, as the first ultrasonic signal has a high frequency and a relatively short wavelength, which is less susceptible to a relevant structure of the acoustic output device 200 (e.g., the aperture, a damping mesh, the waterproof/dustproof mesh, etc.). Therefore, the aperture on the inner sidewall may not need to have a greater area for the transmission and reception of the ultrasonic signal. The smaller the area of the aperture, the more favorable it is to protect an integrity of the acoustic output device 200. However, the area of the aperture may not be too small. A too small area of the aperture may cause a great portion of the transmitted and reflected ultrasonic signals to be blocked by the housing of the sound generation component 210, thereby causing the ultrasonic transducer 231 to transmit and receive fewer ultrasonic signals. In some embodiments, in order to protect the integrity of the acoustic output device 200 and to avoid the fewer ultrasonic signals being transmitted and received by the ultrasonic transducer 231, the area of the aperture may be in a range of 0.5 mm²-100 mm². The area range herein refers to a range of a total area of the one or more apertures provided in the inner sidewall. In some embodiments, to further protect the integrity of the acoustic output device 200, the area range of the apertures may be 0.5 mm²-50 mm². Preferably, the area of the aperture may be in a range of 1 mm²-30 mm². More preferably, the area of the aperture may be in a range of 5 mm²-20 mm².

In some embodiments of the present disclosure, by adopting the high-frequency ultrasonic transducer 231, it may be possible for the ultrasonic signal to be transmitted and received without a need to set up a great area of the aperture on the inner sidewall, so as to reduce an assembly requirement of the ultrasonic transducer 231 in the acoustic output assembly 200.

In some embodiments, the ultrasonic transducer 231 and the sound generation unit 211 may share the aperture, and there may be no need to additionally provide a sound outlet hole on the inner sidewall. The first ultrasonic signal transmitted from the ultrasonic transducer 231 and the sound transmitted from the sound generation unit may both be exported through the aperture to the outside of the sound generation component 210. At this point, a vibration sheet of the ultrasonic transducer 231 may be directly opposite to the aperture, or projection positions of a center of the vibration sheet and a center of the aperture on the ear are close to. At the same time, the sound generation unit 211 may need to be set as close as possible to the aperture. In some embodiments, a distance between the center of the vibration sheet and the projection of the center of the aperture on the inner sidewall may be in a range of 0 mm-10 mm (e.g., 0 mm-8 mm, 0 mm-5 mm, etc.).

In some embodiments of the present disclosure, through making the ultrasonic transducer 231 and the sound generation unit 211 share the aperture, a situation of disposing a plurality of apertures on a limited inner sidewall area may be avoided, thereby protecting an integrity of the acoustic output device 200. The area of the aperture may be moderately enlarged on the basis of not increasing a space occupied by the aperture on the inner sidewall to ensure an output performance of the ultrasonic transducer 231 and the sound generation unit 211.

In some embodiments, the inner side wall may be provided with both the aperture and the sound outlet hole. The ultrasonic transducer 231 and the sound generation unit 211 may respectively correspond to the aperture and the sound outlet hole. The first ultrasonic signal transmitted by the ultrasonic transducer 231 may be exported to the outside of the sound generation component 210 through the aperture. The sound transmitted by the sound generation unit 211 may be exported to the outside of the sound generation component 210 through the sound outlet hole.

In some embodiments of the present disclosure, by making the ultrasonic transducer 231 and the sound generation unit 211 respectively correspond to the aperture and the sound outlet hole, a selection of a mounting position of the ultrasonic transducer 231 may be more flexible.

In some embodiments, a count of the ultrasonic transducer 231 included in the acoustic output device 200 may be one, at this time, the ultrasonic transducer 231 may have a function of transmitting and receiving the ultrasonic signal. In some embodiments, the single ultrasonic transducer 231 may transmit the first ultrasonic signal to the outside of the sound generation component 210 during a transmission time period and detect a second ultrasonic signal during a receiving time period. The second ultrasonic signal may be a reflection signal of the first ultrasonic signal. The receiving time period may be chronologically after the transmission time period, and an interval between the transmission time period and the receiving time period may be greater than a vibration attenuation time period of the ultrasonic transducer 231. The vibration attenuation time period refers to a time taken by an attenuation process of the vibration after the ultrasonic transducer finishes transmitting the signal.

When the acoustic output device 200 performs the wearing detection, if the ultrasonic transducer 231 is far away from the ear, the second ultrasonic signal does not return to the ultrasonic transducer 231 in the vibration attenuation time period, so that the attenuation vibration during the vibration attenuation time period may not affect the detection of the second ultrasonic signal by the ultrasonic transducer 231, i.e., the attenuation vibration and the vibration of the detected second ultrasonic signal does not mix and interfere with each other. If the ultrasonic transducer 231 is close to the ear, it may cause the second ultrasonic signal to return to the ultrasonic transducer 231 during the vibration attenuation time period, such that the attenuation vibration during the attenuation time period affects the detection of the second ultrasonic signal by the ultrasonic transducer 231, i.e., the attenuation vibration and the vibration of the detected second ultrasonic signal may mix and interfere with each other. In order not to interfere with the detection of the second ultrasonic signal by the ultrasonic transducer 231 when the ultrasonic transducer 231 is at a short distance from the ear, the attenuation time period may be as short as possible. In some embodiments, the higher the frequency of the ultrasonic signal, the shorter the attenuation time period. Therefore, when the ultrasonic transducer 231 is closer to the ear, the ultrasonic transducer 231 that transmits an ultrasonic signal with a higher frequency (e.g., 40 kHz, 100 kHz, 150 kHz, 180 kHz, or 200 kHz) may be needed. In some embodiments, the sensor 230 may determine, based on the first ultrasonic signal transmitted by the ultrasonic transducer 231 during the transmission time period and the second ultrasonic signal received during the receiving time period, the wearing state of the acoustic output device 200. For example, when the sensor 230 does not receive the ultrasonic signal during the receiving time period, the sensor 230 may determine that the acoustic output device 200 is in the non-wearing state. As another example, if a strength difference between the first ultrasonic signal transmitted during the transmission time period and the second ultrasonic signal received during the receiving time period is within a preset range, the sensor 230 may determine that the acoustic output device 200 is in the wearing state. If the strength difference between the first ultrasonic signal transmitted during the transmission time period and the second ultrasonic signal received during the receiving time period is beyond the preset range, the sensor 230 may determine that the acoustic output device 200 is in the non-wearing state.

FIG. 10 is a schematic diagram illustrating a non-in-ear acoustic output device provided with a single ultrasonic transducer according to some embodiments of the present disclosure. As shown in FIG. 10, the acoustic output device 200 may be in a wearing state, and the ultrasonic transducer 231 with a high frequency may transmit a first ultrasonic signal in a directionality toward an ear during the transmission time period. A transmission path of the first ultrasonic signal may be blocked in whole or in part by the ear (an ear region 810 shown in FIG. 10), thereby forming a reflection. The ultrasonic transducer 231 may receive a reflected second ultrasonic signal during a receiving time period. Due to the ear strengthens the reflection signal, if the strength of the second ultrasonic signal is greater than the strength of the first ultrasonic signal, the sensor 230 may determine that the acoustic output device 200 is in the wearing state. When the acoustic output device 200 is in a non-wearing state, the first ultrasonic signal may be directly diffused to an outside or may be blocked by a more distant object to form a weak reflection, and the ultrasonic transducer 231 may not receive the ultrasonic signal in the receiving time period or may receive a weaker second ultrasonic signal. If there is no second ultrasonic signal or the strength of the second ultrasonic signal is less than the strength of the first ultrasonic signal, the sensor 230 may determine that the acoustic output device 200 is in the non-wearing state.

In some embodiments of the present disclosure, by adopting the ultrasonic transducer 231 with a function of transmitting and receiving the ultrasonic signal, a mass of the acoustic output device 200 may be reduced, so as to satisfy a requirement of a lightweight nature of the acoustic output device 200, and reduce a wearing burden of the user, and at the same time, it may be favorable for reducing a cost of the product.

In some embodiments, the acoustic output device 200 may include multiple ultrasonic transducers 231. At this time, a portion of the multiple ultrasonic transducers 231 may have a function of transmitting the ultrasonic signal, and may transmit the first ultrasonic signal to the outside of the sound generation component 210. Other portions of the multiple ultrasonic transducers 231 may have the function of receiving the ultrasonic signal, and may receive and detect the second ultrasonic signal. The ultrasonic transducer 231 with the transmitting function and the ultrasonic transducer 231 with the receiving function may be both disposed inside the sound generation component 210. In some embodiments, the sensor 230 may determine, based on the first ultrasonic signal transmitted by the ultrasonic transducer 231 with the transmission function and the second ultrasonic signal received by the ultrasonic transducer 231 with the receiving function, the wearing state of the acoustic output device 200. For example, when the ultrasonic signal is not received by the ultrasonic transducer 231 with the receiving function, the sensor 230 may determine that the acoustic output device 200 is in the non-wearing state. As another example, if the strength of the second ultrasonic signal received by the ultrasonic transducer 231 with the receiving function is smaller than or equal to the strength of the first ultrasonic signal transmitted by the ultrasonic transducer 231 with the transmission function, the sensor 230 may determine that the acoustic output device 200 is in the non-wearing state. For another example, if the strength of the second ultrasonic signal received by the ultrasonic transducer 231 with the receiving function is greater than the strength of the first ultrasonic signal transmitted by the ultrasonic transducer 231 with the transmission function, the sensor 230 may determine that the acoustic output device 200 is in the wearing state. In some embodiments, the ultrasonic transducer 231 with the transmission function may be a high-frequency ultrasonic transducer; and the ultrasonic transducer 231 with the receiving function may be a low frequency ultrasonic transducer or a high frequency ultrasonic transducer.

FIG. 11 is a schematic diagram illustrating a non-in-ear acoustic output device provided with multiple ultrasonic transducers according to some embodiments of the present disclosure. As shown in FIG. 11, the acoustic output device 200 is in a wearing state, and a high-frequency ultrasonic transducer 231A may transmit a first ultrasonic signal in a directionality toward an ear, and a transmission path of the first ultrasonic signal may be blocked in whole or in part by the ear (an ear region 810 as shown in FIG. 10), thereby forming a reflection. An ultrasonic transducer 231B may receive a reflected second ultrasonic signal. If the strength of the second ultrasonic signal is greater than the strength of the first ultrasonic signal, the sensor 230 may determine that the acoustic output device 200 is in a wearing state. When the acoustic output device 200 is in a non-wearing state, the first ultrasonic signal may spread directly to an outside world or may be blocked by a more distant object to form a weak reflection, and the ultrasonic transducer 231B may not receive the ultrasonic signal or may receive a weaker second ultrasonic signal. If there is no second ultrasonic signal or the strength of the second ultrasonic signal is smaller than the strength of the first ultrasonic signal, the sensor 230 may determine that the acoustic output device 200 is in the non-wearing state.

In some embodiments of the present disclosure, the ultrasonic transducer 231 with the transmission function and the ultrasonic transducer 231 with the receiving function may be disposed separately without a need to discriminate between a time of transmission and a time of receiving of the ultrasonic transducer 231, which enables a more flexible set of the time for the ultrasonic transducer 231 to transmit the ultrasonic signal.

FIG. 12 is a schematic diagram illustrating an acoustic output device according to some embodiments of the present disclosure. As shown in FIG. 12, the acoustic output device 300 may include a sound generation component 310, an earhook 320, a sensor 330, and a target warehouse body 340.

In some embodiments, the sound generation component 310 may be provided with a cavity inside for accommodating the sound generation component 311 that produces a sound. The earhook 320 may dispose the sound generation component 310 near an ear without blocking an earhole. When wearing the acoustic output device 300, an end of the earhook 320 near a face may be connected to the sound generation component 310, and an end of the earhook 320 near a back side of a head may be connected to the target warehouse body 340. The sound generation component 310 and the target warehouse body 340 may be arranged to be separated by the user's auricle, and are located on both sides of the auricle respectively.

In some embodiments, the sound generation component 310, the earhook 320, and the sensor 330 may be example embodiments of the sound generation component 110, the support member 120, and the sensor 130 as shown in FIG. 1, respectively. In some embodiments, the sound generation component 310, the earhook 320, and the sensor 330 may be similar to the sound generation component 210, the support member 220, and the sensor 230 illustrated in FIG. 2, respectively, and the acoustic output device 300 may selectively adopt relevant technical features of the acoustic output device 200. For more descriptions of the sound generation component 310, the ear hanging 320, and the sensor 330, please refer to relevant descriptions in FIG.2. The acoustic output device 300 shown in FIG. 3 is for exemplary description only and does not constitute a limitation. For example, the target warehouse body 340 may be disposed in any region of the earhook 320 near the back side of the head, and is not limited to being attached to the end of the earhook 320 near the back side of the head.

The target warehouse body 340 refers to a cavity for accommodating the second ultrasonic transducer 332. In some embodiments, the target warehouse body 340 may be cylindrical, rectangular, or in other customized shapes to meet the requirements of an internal component layout. In some embodiments, the target warehouse body 340 may be made of an acrylonitrile butadiene styrene (ABS) plastic, a metal alloy, or other suitable material to ensure a lightweight, a durability, and a comfort to wear. In some embodiments, the acoustic output device 300 may include a battery or a circuit board, which are disposed in the sound generation component 310, in the target warehouse body 340, or in the earhook 320.

In some embodiments, the sensor 330 may include the first ultrasonic transducer 331 and the second ultrasonic transducer 332. The first ultrasonic transducer 331 may be disposed within the sound generation component 310, and the second ultrasonic transducer 332 may be disposed within the target warehouse body 340. The first ultrasonic transducer 331 may transmit the ultrasonic signal to the second ultrasonic transducer 332, and the second ultrasonic transducer 332 may receive the ultrasonic signal. Alternatively, the second ultrasonic transducer 332 may transmit the ultrasonic signal to the first ultrasonic transducer 331, and the first ultrasonic transducer 331 may receive the ultrasonic signal. For the convenience of illustration, it is assumed below that the first ultrasonic transducer 331 is used to transmit the ultrasonic signal, and the second ultrasonic transducer 332 is used to receive the ultrasonic signal. When the acoustic output device 300 is in the wearing state, the ultrasonic signal transmitted by the first ultrasonic transducer 331 may be blocked by an auricle of the user, resulting in the second ultrasonic transducer 332 receiving no or very little of the ultrasonic signal.

When the ultrasonic transducer transmitting the ultrasonic signal (e.g., the first ultrasonic transducer 331) has insufficient directivity, the ultrasonic signal transmitted from the first ultrasonic transducer 331 may leak from a circumference of the auricle and be picked up by the ultrasonic transducer receiving the ultrasonic signal (e.g., the second ultrasonic transducer 332), resulting in a misdetection of the wearing state. To more accurately detect the wearing state of the acoustic output device 300, a spatial directivity of the ultrasonic transducer transmitting the ultrasonic signal may be increased. When the directivity is sufficiently strong, the ultrasonic signal transmitted by the ultrasonic transducer may be able to be completely blocked by the auricle. In some embodiments, by improving a frequency of the ultrasonic signal transmitted by the ultrasonic transducer, so as to improve the directivity of the ultrasonic transducer that transmits the ultrasonic signal, a more accurate detection of the acoustic wearing state of the output device 300 may be realized. In some embodiments, the frequency of the ultrasonic signal transmitted by the ultrasonic transducer transmitting the ultrasonic signal may not be less than 20 kHz. In some embodiments, to further improve the directivity of the first ultrasonic transducer 331, the frequency of the ultrasonic signal may not be less than 40 kHz. Preferably, the frequency of the ultrasonic signal may not be less than 80 kHz. Preferably, the frequency of the ultrasonic signal may not be less than 100 kHz. Preferably, the frequency of the ultrasonic signal may not be less than 150 kHz. Preferably, the frequency of the ultrasonic signal may not be less than 180 kHz. More preferably, the frequency of the ultrasonic signal may not be less than 200 kHz. In some embodiments, the ultrasonic transducer receiving the ultrasonic signal may have the same feature other than a setup position, e.g., an ultrasonic frequency, power, directivity, etc., as the ultrasonic transducer transmitting the ultrasonic signal. In some embodiments, as only the ultrasonic signal needs to be received, the ultrasonic frequency of the ultrasonic transducer that receives the ultrasonic signal may be lower than the ultrasonic frequency of the ultrasonic transducer that transmits the ultrasonic signal. In some embodiments, as only the ultrasonic signal needs to be received, the power of the ultrasonic transducer that receives the ultrasonic signal may be lower than the power of the ultrasonic transducer that transmits the ultrasonic signal. In some embodiments, as only the ultrasonic signal needs to be received, the ultrasonic transducer that receives the ultrasonic signal may have a lower directivity than the ultrasonic transducer that transmits the ultrasonic signal.

In some embodiments, the sensor 330 may determine the wearing state of the acoustic output device 300 based on the detection of the ultrasonic signal by the ultrasonic transducer receiving the ultrasonic signal. For example, when no, or very few, ultrasonic signal is detected by the ultrasonic transducer receiving the ultrasonic signal, the sensor 330 may determine that the acoustic output device 300 is in the wearing state, otherwise, the sensor 330 may determine that the acoustic output device 300 is in the non-wearing state. In some embodiments, the sensor 330 may determine the wearing state of the acoustic output device based on the ultrasonic signal transmitted by the ultrasonic transducer transmitting the ultrasonic signal and the ultrasonic signal detected by the ultrasonic transducer receiving the ultrasonic signal. For example, when the strength of the transmitted ultrasonic signal and the strength of the detected ultrasonic signal are consistent or tend to be consistent, the sensor 330 may determine that the acoustic output device 300 is in the non-wearing state. When the strength of the transmitted ultrasonic signal and the strength of the detected ultrasonic signal are inconsistent, the sensor 330 may determine that the acoustic output device 300 is in the wearing state. In some embodiments, the sensor 330 may be preset with a second threshold related to the difference in strength between the transmitted ultrasonic signal and the detected ultrasonic signal. Specifically, when no ultrasonic signal is detected or the difference in strength between the transmitted and detected ultrasonic signals is greater than the second threshold, the sensor 330 may determine that the acoustic output device 300 is in the wearing state; when the transmitted and detected ultrasonic signals have the same strength or the difference between the strengths is less than the second threshold, the sensor 330 may determine that the acoustic output device 300 is in the non-wearing state. In some embodiments, the second threshold may be determined based on a desired probability of misdetection, and the greater the second threshold, the lower the probability of misdetection.

In some embodiments, when the sensor 330 detects a change in the wearing state of the acoustic output device 300, the sensor 330 may control the output state of the acoustic output device 300 to change accordingly. When determining that the acoustic output device 300 is switched from the non-wearing state to the wearing state, the sensor 330 controls the acoustic output device 300 to switch to a working state, for example, the sensor 330 controls the sound generation component 311 to produce the sound; when determining that the acoustic output device 300 is switched from the wearing state to the non-wearing state, the sensor 330 controls the acoustic output device 300 to be switched to a non-working state, for example, the sensor 330 controls the sound generation component 311 to stop producing the sound.

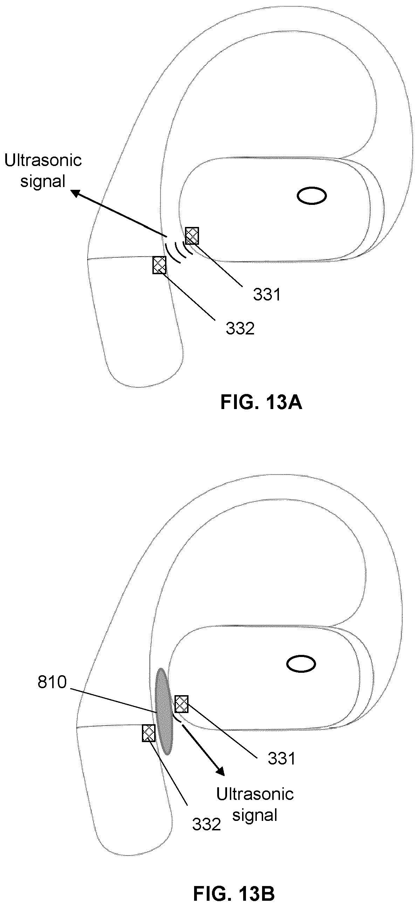

FIG. 13A and FIG. 13B are schematic diagrams each of which illustrates a wearing state detection of a non-in-ear acoustic output device according to some embodiments of the present disclosure. When the acoustic output device 300 is in a non-wearing state, as shown in FIG.13A, the first ultrasonic transducer 331 may transmit an ultrasonic signal in a directionality toward the second ultrasonic transducer 332, and the second ultrasonic transducer 332 may receive the ultrasonic signal. When the ultrasonic signal received by the second ultrasonic transducer 332 is the same strength as the ultrasonic signal transmitted by the first ultrasonic transducer 331, or a strength difference between the ultrasonic signals received by the second ultrasonic transducer 332 and transmitted by the first ultrasonic transducer 331 is less than a second threshold, the sensor 330 may determine that the acoustic output device 300 is in the non-wearing state. When the acoustic output device 300 is in the wearing state, as shown in FIG. 13B, a path of the first ultrasonic transducer 331 transmitting the ultrasonic signal to the second ultrasonic transducer 332 may be blocked in whole or in part by an ear (the ear region 810 shown in FIG. 13), and the second ultrasonic transducer 332 may not receive the ultrasonic signal or the strength difference between the received and transmitted ultrasonic signals may be greater than the second threshold. At this time, the sensor 330 may determine that the acoustic output device 300 is in the wearing state.

The acoustic output device 300 may detect a wearing state by adopting an ultrasonic transducer disposed on either side of the ear, which has a lower wearing requirement for the acoustic output device 300, and can be applied to more wearing positions of the acoustic output device 300, while the ultrasonic transducer may have a more stable signal transmission and a better directivity, thereby making the wearing detection more sensitive.

The basic concepts have been described above, and it is apparent to those skilled in the art that the foregoing detailed disclosure serves only as an example and does not constitute a limitation of the present disclosure. While not expressly stated herein, those skilled in the art may make various modifications, improvements, and amendments to the present disclosure. Those types of modifications, improvements, and amendments are suggested in the present disclosure, so those types of modifications, improvements, and amendments remain within the spirit and scope of the embodiments of the present disclosure.

Also, the present disclosure uses specific words to describe embodiments of the present disclosure. Such as "an embodiment", "one embodiment", and/or "some embodiments" means a feature, structure, or characteristic associated with at least one embodiment of the present disclosure. Accordingly, it should be emphasized and noted that the "one embodiment", "an embodiment", or "an alternative embodiment" referred to two or more times in different locations in the present disclosure means a feature, structure, or characteristic related to at least one embodiment of the present disclosure. In addition, certain features, structures, or characteristics of one or more embodiments of the present disclosure may be suitably combined.

Furthermore, unless expressly stated in the claims, the order of the processing elements and sequences, the use of numerical letters, or the use of other names as described in the present disclosure are not intended to qualify the order of the processes and methods of the present disclosure. While some embodiments of the invention that are currently considered useful are discussed in the foregoing disclosure by way of various examples, it should be appreciated that such details serve only illustrative purposes and that additional claims are not limited to the disclosed embodiments. Rather, the claims are intended to cover all amendments and equivalent combinations that are consistent with the substance and scope of the embodiments of the present disclosure. For example, although the implementation of various components described above may be embodied in a hardware device, it may also be implemented as a software only solution, e.g., an installation on an existing server or mobile device.

Similarly, it should be noted that in order to simplify the presentation of the disclosure of the present disclosure, and thereby aiding in the understanding of one or more embodiments of the present disclosure, the foregoing descriptions of embodiments of the present disclosure sometimes group multiple features together in a single embodiment, accompanying drawings, or in a description thereof. However, this manner of disclosure does not imply that more features are required for the objects of the present disclosure than are mentioned in the claims. Rather, the claimed subject matter may lie in less than all features of a single foregoing disclosed embodiment.

Some embodiments use numbers to describe the number of components, attributes, and it should be understood that such numbers used in the description of the embodiments are modified in some examples by the modifiers "about", "approximately", or "substantially". Unless otherwise noted, the terms "about," "approximate," or "substantially" indicates that a ±20% variation in the stated number is allowed. Correspondingly, in some embodiments, the numerical parameters used in the present disclosure and the claims are approximations, which change depending on the desired characteristics of individual embodiments. In some embodiments, the numerical parameters should take into account the specified number of valid digits and use a general digit retention method. While the numerical domains and parameters used to confirm the breadth of their ranges in some embodiments of the present disclosure are approximations, in specific embodiments such values are set to be as precise as possible within a feasible range.

For each of the patents, patent applications, patent application disclosures, and other materials cited in the present disclosure, such as articles, books, specification sheets, publications, documents, etc., are hereby incorporated by reference in their entirety into the present disclosure. Application history documents that are inconsistent with or conflict with the contents of the present disclosure are excluded, as are documents (currently or hereafter appended to the present disclosure) that limit the broadest scope of the claims of the present disclosure. It should be noted that in the event of any inconsistency or conflict between the descriptions, definitions, and/or use of terms in the materials appended to the present disclosure and those set forth herein, the descriptions, definitions and/or use of terms in the present disclosure shall control. use shall prevail.

Finally, it should be understood that the embodiments described in the present disclosure are only used to illustrate the principles of the embodiments of the present disclosure. Other deformations may also fall within the scope of the present disclosure. As such, alternative configurations of embodiments of the present disclosure may be considered to be consistent with the teachings of the present disclosure as an example, not as a limitation. Correspondingly, the embodiments of the present disclosure are not limited to the embodiments expressly presented and described herein.

## Claims

1. An acoustic output device, comprising:
a sound generation component configured to accommodate a sound generation unit that produces a sound;
a support member configured to dispose the sound generation component near an ear without blocking an earhole; and
a sensor including at least one ultrasonic transducer disposed inside the sound generating component, the sensor being configured to transmit a first ultrasonic signal to an outside of the sound generation component through the at least one ultrasonic transducer, the sensor being further configured to detect a second ultrasonic signal through the at least one ultrasonic transducer and determine a wearing state of the acoustic output device based on the detection, wherein the second ultrasonic signal includes the first ultrasonic signal or a reflection signal of the first ultrasonic signal, and when a change of the wearing state of the acoustic output device causes a change in the second ultrasonic signal detected by the sensor, an output state of the acoustic output device changes.

2. The acoustic output device of claim 1, wherein the sound generation component includes an inner sidewall facing the ear, and the at least one ultrasonic transducer is arranged on the inner sidewall.

3. The acoustic output device of claim 2, wherein
the at least one ultrasonic transducer includes a vibration sheet configured to generate the first ultrasonic signal, a frequency of the first ultrasonic signal being not less than 40 kHz; and
the inner sidewall is provided with an aperture, the first ultrasonic signal is spread to an outside of the sound generation component through the aperture.

4. The acoustic output device of claim 3, wherein the frequency of the first ultrasonic signal is not less than 150 kHz.

5. The acoustic output device of claim 3, wherein an angle of a directivity of the first ultrasonic signal is in a range of 5°-90°.

6. The acoustic output device of claim 3, wherein an area of the aperture on the inner sidewall is in a range of 0.5 mm²-1 cm².

7. The acoustic output device of claim 3, wherein the sound produced by the sound generation unit is exported to an outside of the sound generation component through the aperture on the inner sidewall.

8. The acoustic output device of claim 3, wherein the inner sidewall is provided with a sound outlet hole, and the sound produced by the sound generation unit is exported to an outside of the sound generation component through the sound outlet hole.

9. The acoustic output device of claim 1, wherein a count of the at least one ultrasonic transducer is one, and the ultrasonic transducer transmits the first ultrasonic signal to the outside of the sound generation component during a transmission time period and detects the second ultrasonic signal during a receiving time period, the second ultrasonic signal being the reflection signal of the first ultrasonic signal.

10. The acoustic output device of claim 1, wherein a count of the at least one ultrasonic transducer is multiple, and a portion of the multiple ultrasonic transducers transmits the first ultrasonic signal to the outside of the sound generation component, the other portions of the multiple ultrasonic transducers detect the second ultrasonic signal, the second ultrasonic signal being the reflection signal of the first ultrasonic signal, the multiple ultrasonic transducers being located inside the sound generation component.

11. An acoustic output device, comprising:
a sound generation component configured to accommodate a sound generation unit that produces a sound;
an earhook, one end of the earhook being connected to the sound generation component and disposing the sound generation component near an ear without blocking an earhole, the other end of the earhook being connected to a target warehouse body, in a wearing state of the acoustic output device, the sound generation component and the target warehouse body being located on both sides of the ear; and
a sensor including a first ultrasonic transducer and a second ultrasonic transducer respectively disposed inside the sound generation component and the target warehouse body, the sensor being configured to transmit, through one of the first ultrasonic transducer and the second ultrasonic transducer, an ultrasonic signal to the other of the first ultrasonic transducer and the second ultrasonic transducer and detect, through the other of the first ultrasonic transducer and the second ultrasonic transducer, the ultrasonic signal, the sensor being further configured to determine the wearing state of the acoustic output device based on the detection, wherein when a change of the wearing state of the acoustic output device causes a change in the ultrasonic signal detected by the sensor, an output state of the acoustic output device changes.

12. The acoustic output device of claim 11, wherein a frequency of the ultrasonic signal is not less than 20 kHz.

13. The acoustic output device of claim 11, wherein an angle of a directivity of the ultrasonic signal is in a range of 5°-90°.

14. The acoustic output device of claim 11, wherein the sound generation component includes an inner sidewall facing the ear, and the first ultrasonic transducer is arranged on the inner sidewall.

15. The acoustic output device of claim 14, wherein the sensor is configured to transmit the ultrasonic signal through the first ultrasonic transducer to the second ultrasonic transducer and detect the ultrasonic signal through the second ultrasonic transducer.

16. The acoustic output device of claim 15, wherein
the first ultrasonic transducer includes a vibration sheet configured to generate the ultrasonic signal, and
the inner sidewall is provided with an aperture, the ultrasonic signal is spread to an outside of the sound generation component through the aperture.

17. The acoustic output device of claim 15, wherein an area of the aperture on the inner sidewall is in a range of 0.5 mm²-1 cm².

18. The acoustic output device of claim 15, wherein the sound produced by the sound generation unit is exported to an outside of the sound generation component through the aperture on the inner sidewall.

19. The acoustic output device of claim 15, wherein the inner sidewall is provided with a sound outlet hole, and the sound produced by the sound generation unit is exported to an outside of the sound generation component through the sound outlet hole.

20. The acoustic output device of claim 11, wherein the sensor is configured to transmit the ultrasonic signal to the first ultrasonic transducer through the second ultrasonic transducer and detect the ultrasonic signal through the first ultrasonic transducer.
